# EUROPÄISCHE PATENTSCHRIFT

(11) **EP 4 029 361 B1**
(45) Veröffentlichungstag und Bekanntmachung des Hinweises auf die Patenterteilung: **11.02.2026**
(21) Anmeldenummer: 22401000.9
(22) Anmeldetag: 11.01.2022
(51) Int. Cl.: A01C 7/04, A01B 71/08, A01C 7/12

(54) **DOSIERSYSTEM EINER LANDWIRTSCHAFTLICHEN SÄMASCHINE**
METERING SYSTEM FOR AN AGRICULTURAL SOWING MACHINE
SYSTÈME DE DOSAGE D'UN SEMOIR AGRICOLE

(30) Priorität: 14.01.2021 DE 102021100613
(43) Veröffentlichungstag der Anmeldung: 20.07.2022
(73) Patentinhaber: Amazonen-Werke H. Dreyer SE & Co. KG, 49205 Hasbergen (DE)
(72) Erfinder: Radeke, Jan Philipp, 27211 Bassum (DE); Wien, Thomas, 28816 Stuhr (DE)

(56) Entgegenhaltungen:
- EP-A1- 2 243 344
- EP-A1- 3 053 427
- DE-A1- 102018 120 071
- DE-U1- 9 214 315
- US-B1- 6 192 812

## Beschreibung

Die Erfindung betrifft ein Dosiersystem für eine landwirtschaftliche Sämaschine gemäß dem Oberbegriff des Patentanspruches 1.

Auf dem Gebiet der Landwirtschaft sind eine Vielzahl von Varianten gezogener und/oder auf- bzw. angebauter Arbeitsgeräte bekannt. Hierzu zählen unter anderem landwirtschaftliche Sämaschinen, die zur Abgabe von körnigem Material, insbesondere Saatgut und/oder Dünger, auf einer landwirtschaftlichen Nutzfläche geeignet sind. Gattungsgemäße Sämaschinen sind dabei je nach Bedarf insbesondere als mechanische, pneumatische und/oder Einzelkorn-Sämaschinen ausgebildet und weisen demnach ein für den jeweiligen Anwendungsfall geeignetes Dosiersystem auf.

Ein derartiges Dosiersystem ist beispielsweise in der DE 10 2016 112 058 A1 beschrieben. Das Dosiersystem umfasst dabei zumindest eine Dosiervorrichtung die dazu eingerichtet, das zubringbare körnige Material in bedarfsgerechten Mengen und in Richtung der landwirtschaftlichen Nutzfläche auszugeben. Ferner umfasst das Dosiersystem zumindest ein der Dosiervorrichtung zugeordnetes Abdeckmittel. Die zumindest eine Dosiervorrichtung ist dabei zum Schutz vor äußerlichen Einwirkungen, insbesondere Verunreinigungen, zumindest teilweise vom Abdeckmittel abdeckbar.

Nachteilig an diesem Aufbau ist unter anderem, dass mittels einem derartig, insbesondere nach Art eines Abdeckblechs, ausgebildeten Abdeckmittels, die Dosiervorrichtung nur in einer von mehreren Arbeitsstellungen der Sämaschine, insbesondere des Dosiersystems, ausreichend vor äußerlichen Einflüssen geschützt ist. Es hat sich ferner herausgestellt, dass beim Einsatz derartig ausgebildeter Abdeckmittel weiterhin Verunreinigungen in Form von aufgewirbeltem Ackerboden, Staub und/oder Flüssigkeiten, wie beispielsweise Regen, bis zur Dosiervorrichtung gelangen und dabei die Ausbringung des körnigen Materials und/oder die Betriebssicherheit des Dosiersystems negativ beeinflussen.

Darüber hinaus sind auch Dosiersysteme bekannt geworden, welche zum Schutz der Dosiervorrichtung ein zumindest teilweise aus flexiblem Material, insbesondere Kunststoff, ausgebildetes Abdeckmittel aufweisen. Die Dosiervorrichtung ist dabei mittels des zumindest einen Abdeckmittels abdeckbar ausgeführt. Ein derartiges Dosiersystem ist beispielsweise in der Druckschrift US 6 192 812 B1 beschrieben.

Neben der verhältnismäßig eher geringen Anpassbarkeit derartig ausgeführter Abdeckmittel, beispielsweise zur Montage an unterschiedliche Dosiervorrichtungen, hat sich außerdem auch die Zugänglichkeit zur Dosiervorrichtung, insbesondere während des Betriebs, als besonders nachteilig erwiesen.

Die der Erfindung zugrunde liegende Aufgabe besteht somit darin, die Betriebssicherheit bisheriger Dosiersysteme in besonders einfacher Weise weiter zu erhöhen. Insbesondere soll dabei der Schutz der Dosiervorrichtung vor äußerlichen Einwirkungen während des Betriebs noch weiter verbessert werden.

Diese Aufgabe wird erfindungsgemäß gelöst durch die kennzeichnenden Merkmale des Anspruches 1.

Infolge dieser Maßnahme ist die zumindest eine Dosiervorrichtung des Dosiersystems von mehreren, vorzugsweise zumindest nahezu allen, Seiten vom zumindest einen Abdeckmittel abgedeckt und/oder geschützt. Die, insbesondere innere und/oder äußere, Form des Abdeckmittels ist dabei bevorzugt zumindest teilweise korrespondierend zur Dosiervorrichtung ausgebildet. Besonders bevorzugt ist dabei ein Abdeckmittel das nach Art einer Hülle bzw. Schale ausgebildet ist, wobei die Dosiervorrichtung hierbei vorzugsweise zumindest nahezu vollständig von außen vom Abdeckmittel umschlossen ist. Somit ist die Dosiervorrichtung von Verschmutzungen oder Flüssigkeiten aus, insbesondere mehreren unterschiedlichen Richtungen, besonders gut geschützt. Ferner hat ein aus zumindest teilweise flexiblem Material ausgebildetes Abdeckmittel den Vorteil, dass es an unterschiedlichen Dosiervorrichtungen, insbesondere mit unterschiedlichen Abmessungen, anbringbar und/oder einsetzbar ist.

Durch das Abdeckmittel ist ein Bediener ferner vor beispielsweise beweglichen bzw. rotierenden Teilen oder Oberflächen mit besonders hohen Temperaturen an der Dosiervorrichtung und/oder eines dazu zugeordneten Antriebs geschützt.

Bei einer weiteren bevorzugten Ausführungsform, bei der das Abdeckmittel aus einem flexiblen Material nach Art von Gewebe- und/oder Textilmaterial ausgebildet ist, ist außerdem eine besonders gute Abführung der Abwärme der Dosiervorrichtung selbst und/oder zumindest einem dazu zugeordneten Antriebs erreichbar, womit die Betriebssicherheit des Dosiersystems, insbesondere der Dosiervorrichtung, noch weiter verbessert ist. Das Abdeckmittel ist dazu bevorzugt nach Art einer genähten Haube ausgeführt.

Ferner bevorzugt ist außerdem ein Abdeckmittel das zusätzlich zumindest abschnittsweise aus unflexiblem Material, insbesondere Metall oder Kunststoff, ausgebildet ist. Durch eine derartige Ausführungsform des Abdeckmittels ist die Dosiervorrichtung zumindest teilweise vor verhältnismäßig groben und/oder festen Verunreinigungen, insbesondere Festkörpern, besonders gut abgeschirmt.

In einer bevorzugten Ausführungsform des erfindungsgemäßen Dosiersystems ist das Abdeckmittel zumindest teilweise sack- oder mantelförmig ausgebildet. Diese Ausführungsform erlaubt auf der einen Seite eine besonders gute Umhüllung der Dosiervorrichtung durch das Abdeckmittel und auf der anderen Seite eine besonders einfache Handhabung für einen Bediener, insbesondere während der Montage des Abdeckmittels. Das Abdeckmittel ist hierbei besonders bevorzugt einteilig ausgeführt. Alternativ oder zusätzlich kann das Abdeckmittel hierbei auch schlauchförmig, insbesondere zum Boden hin geöffnet, ausgebildet sein, damit Verunreinigungen, insbesondere aufgrund der Schwerkraft, aus dem Abdeckmittel heraus entweichen können.

In einer Weiterbildung des erfindungsgemäßen Dosiersystems ist das Abdeckmittel mehrteilig, vorzugsweise zweiteilig, ausgebildet. Die Einzelteile des Abdeckmittels sind hierbei vorzugsweise form- und/oder kraftschlüssig miteinander verbindbar, wobei eine Verbindung nach Art zumindest eines Klett-, Reiß- oder Knopfverschlusses, insbesondere Druckknopfs oder Knopflochs, besonders bevorzugt ist. Bei einer derartigen Ausführungsform ist eine besonders hohe Anpassungsfähigkeit des Abdeckmittels erreicht. Das Abdeckmittel ist somit beispielsweise hinsichtlich der Formgebung und/oder den Abmessungen unterschiedlich bzw. bedarfsgerecht in Abhängigkeit der Dosiervorrichtung konfigurierbar.

In einer anderen bevorzugten Ausführungsform des erfindungsgemäßen Dosiersystems ist das Abdeckmittel zumindest teilweise festkörper- und/oder flüssigkeitsabweisend ausgebildet und vorzugsweise dazu eingerichtet, Verschmutzungen, insbesondere Staub und/oder Ackerboden, und/oder Flüssigkeiten, insbesondere Wasser, zumindest teilweise von der Dosiervorrichtung zurückzuhalten. Das Gewebe bzw. die Textur des Materials, insbesondere die Gitterstruktur des Stoffs, aus dem das Abdeckmittel gebildet ist, ist hierbei besonders fein bzw. dicht ausgeführt, so dass beispielsweise Staubkörner oder Tröpfchen zumindest nahezu vollständig von außen am Abdeckmittel abprallen bzw. abfließen. Durch eine derartige Ausführungsform ist die Dosiervorrichtung neben Verschmutzungen, wie beispielsweise Ackerboden, außerdem gegen Staub und/oder Witterung, wie beispielsweise Regen, besonders gut geschützt. Das Abdeckmittel ist hierbei, insbesondere aufgrund zumindest abschnittsweise semipermeabler Materialeigenschaften, atmungsaktiv bzw. luft- und/oder wasserdampfdurchlässig ausgeführt.

Alternativ oder zusätzlich ist außerdem eine, vorzugsweise regelmäßige, Imprägnierung des Abdeckmittels denkbar, durch die äußerlichen Einwirkungen auf die Dosiervorrichtung noch besser durch das Abdeckmittel zurückgehalten werden. Das Abdeckmittel ist hierbei ferner bevorzugt aus Polyester und/oder Baumwolle oder hierzu ähnlich Stoffen ausgebildet. Alternativ kann das Abdeckmittel auch nach Art einer Abdeckplane, insbesondere aus Folienmaterial, ausgeführt sein.

Ferner ist außerdem ein Abdeckmittel bevorzugt, welches zumindest eine Durchlüftungsöffnung bzw. einen Lüftungsschlitz aufweist. Durch die zumindest eine Durchlüftungsöffnung bzw. den zumindest einen Lüftungsschlitz ist die Abwärme der Dosiervorrichtung und/oder des zumindest einen Antriebs zumindest teilweise aus dem Abdeckmittel heraus abführbar und/oder Frischluft von außen zuführbar. Das Abführen von Abwärme und/oder das Zuführen von Frischluft kann hierbei alternativ oder zusätzlich durch zumindest eine der Durchlüftungsöffnung bzw. dem Lüftungsschlitz zugeordnete Luftförderungsapparatur, insbesondere einen antreibbaren Lüfter, unterstützt werden.

Darüber hinaus umfasst das Dosiersystem bevorzugt zumindest einen der Dosiervorrichtung vorgeordneten Vorratsbehälter zum Bevorraten des auszubringenden körnigen Materials. Der Vorratsbehälter weist dabei vorzugsweise zumindest einen, insbesondere trichterförmigen, Auslaufbereich auf, durch den das körnige Material der zumindest einen Dosiervorrichtung zubringbar ist.

In einer anderen Weiterbildung des erfindungsgemäßen Dosiersystems ist das Abdeckmittel form- und/oder kraftschlüssig, vorzugsweise nach Art einer Klemmverbindung, am Vorratsbehälter und/oder der Dosiervorrichtung, insbesondere zwischen dem Vorratsbehälter und der Dosiervorrichtung, angeordnet. Das Abdeckmittel weist hierbei bevorzugt zumindest einen Ausschnitt auf mittels dem das Abdeckmittel am Vorratsbehälter und/oder der Dosiervorrichtung aufsetz- und/oder aufziehbar ist. Das Abdeckmittel ist hierbei derart am Vorratsbehälter und/oder der Dosiervorrichtung angeordnet, dass er Vorratsbehälter und/oder die Dosiervorrichtung zumindest teilweise über den wenigstens einen Ausschnitt des Abdeckmittels, vorzugsweise nach Art einer Verliersicherung, hervorsteht. Alternativ oder zusätzlich ist auch zumindest eine Schraubverbindung denkbar, durch die das Abdeckmittel am Vorratsbehälter und/oder der Dosiervorrichtung anbringbar ist, wobei das Abdeckmittel zumindest einen zusätzlichen Ausschnitt für die wenigstens eine Schraubverbindung aufweist. Bei dieser Ausführungsform ist das Abdeckmittel besonders einfach und dabei sicher innerhalb des Dosiersystems montierbar.

In einer weiteren bevorzugten Ausführungsform des erfindungsgemäßen Dosiersystems ist dem Abdeckmittel zumindest ein Dichtungselement zugeordnet, wobei das Dichtungselement, vorzugsweise wasser- und/oder staubdicht, zwischen dem Abdeckmittel und dem Vorratsbehälter oder der Dosiervorrichtung angeordnet ist. Das Dichtungselement ist des Weiteren bevorzugt im Bereich zumindest eins Ausschnitts des Abdeckmittels angeordnet, wobei das Dichtungselement vorzugsweise korrespondierend zum Umfang des wenigstens einen Ausschnitts ausgebildet ist. Das Dichtungselement ist vorzugsweise aus einem Kunststoffmaterial, insbesondere als Elastomer bzw. nach Art einer Gummidichtung, ausgebildet. Alternativ oder zusätzlich kann dem Abdeckmittel zumindest ein, vorzugsweise nach Art eines Halteblechs ausgebildetes, Befestigungselement zugeordnet sein, wobei das Dichtungselement und/oder das Abdeckmittel auf dem Befestigungselement aufziehbar und/oder mittels dem Befestigungselements am Vorratsbehälter und/oder der Dosiervorrichtung einklemmbar ist.

Darüber hinaus sind alternativ oder zusätzlich Dichtungselemente an Zusatzöffnungen, beispielsweise zum Durchführen von Schlauch- und/oder Kabelleitungen am Abdeckmittel denkbar.

In der erfindungsgemäßen Ausführungsform des Dosiersystems weist das Abdeckmittel zumindest eine erste Öffnung mit anpassbarem Öffnungsquerschnitt auf. Hierbei ist der Öffnungsquerschnitt der zumindest einen ersten Öffnung variabel ausgebildet, wobei der Öffnungsquerschnitt hierbei von einem vollständig geöffneten, insbesondere großen, Öffnungsquerschnitt bis zu einem zumindest nahezu vollständig geschlossenen, insbesondere kleinen, Öffnungsquerschnitt anpassbar ist. Das Abdeckmittel ist hierbei während des Ausbringens des körnigen Materials ferner in einem geöffneten und/oder geschlossenen Zustand einsetzbar. Vorzugsweise umfasst das Abdeckmittel hierzu zumindest ein zusammen- und/oder auseinanderziehbares Seil- und/oder Schnurrelement, wobei das Seil- und/oder Schnurrelement dazu eingerichtet ist, den Öffnungsquerschnitt durch ein Zusammenziehen bzw. Festziehen zu verkleinern und/oder durch ein Auseinanderziehen bzw. Lösen zu vergrößern. Alternativ oder zusätzlich sind zur Anpassung des Öffnungsquerschnitts auch entlang der zumindest einen ersten Öffnung Klett-, Reiß- und/oder Knopfverschlussverbindungen denkbar. Ferner weist die Dosiervorrichtung bevorzugt zumindest einen Ausgabebereich zum Ausgeben des zubringbaren körnigen Materials auf, wobei der Ausgabebereich zumindest teilweise aus der zumindest einen ersten Öffnung herausragend bzw. hervorstehend ausgebildet ist. Die erste Öffnung ist dabei bevorzugt derart verschließbar bzw. festziehbar, dass das Abdeckmittel im geschlossenen und/oder festgezogenen Zustand zumindest teilweise an der Dosiervorrichtung, insbesondere am Ausgabebereich, anliegt. Durch diese Ausführungsform ist die Dosiervorrichtung auch vor Verunreinigungen und/oder Flüssigkeiten aus einer Richtung von unten, insbesondere entgegen der Schwerkraft, besonders gut geschützt. Darüber hinaus ist das Abdeckmittel beispielsweise bei erhöhter Bildung und/oder Ansammlung von Flüssigkeiten, beispielsweise aufgrund von Kondensatbildung, und/oder Staub innerhalb es Abdeckmittel auch im zumindest teilweise geöffneten Zustand während der Ausbringung einsetzbar.

Darüber hinaus ist ein erfindungsgemäßes Dosiersystem bevorzugt bei dem zumindest eine an dem Abdeckmittel angeordnete zweite Öffnung, zumindest teilweise mittels wenigstens eines, vorzugsweise nach Art eines Reiß-, Klett- und/oder Knopfverschlusses ausgebildeten, Verschließelementes verschließbar ist. Die Verbindung ist dabei derart ausgebildet, dass sie von einem Bediener, vorzugsweise werkzeuglos, geöffnet und/oder wieder geschlossen werden kann. Die Größe der zweiten Öffnung ist dabei auf die Größe von Dosierelementen der Dosiervorrichtung, beispielsweise Dosierräder, und/oder Antriebselementen des zumindest einen zugeordneten Antriebs abgestimmt, so dass die zweite Öffnung nach Art einer Umrüst- und/oder Wartungsöffnung zum Herausnehmen und/oder Einsetzen von zumindest einzelnen von Dosier- und/oder Antriebselementen verwendbar ist. Darüber hinaus ist die zumindest eine zweite Öffnung bevorzugt in Fahrtrichtung von vorne oder von hinten am Abdeckmittel angeordnet, so dass sie für einen Bediener besonders gut zugänglich ist. Das Abdeckmittel ist durch diese Ausführungsform darüber hinaus auch in einem zumindest teilweise geöffneten Zustand während Ausbringung verwendbar, womit eine besonders gute Durchflüftung, insbesondre Zuführung von Frischluft und/oder Abführung von Abwärme, erreicht ist. Hierdurch ist die Betriebssicherheit gattungsgemäßer Dosiersysteme noch weiter verbessert.

In einer anderen bevorzugten Ausführungsform des erfindungsgemäßen Dosiersystems ist dem Abdeckmittel zumindest ein Strukturelement zugeordnet, welches dazu eingerichtet ist, das Abdeckmittel zumindest teilweise zu spannen und/oder zu halten. Das Abdeckmittel, insbesondere das flexible Material des Abdeckmittels, ist hierbei zumindest teilweise am Strukturelement angeordnet. Das Strukturelement ist dabei vorzugsweise zumindest teilweise als Rohrkonstruktion ausgebildet. Alternativ oder zusätzlich sind auch Halte- und/oder Spannelement am Vorratsbehälter und/oder der Dosiervorrichtung zum Halten und/oder Spannen des Abdeckmittels denkbar. Durch diese Ausführungsform ist das Abdeckmittel besonders fest innerhalb des Dosiersystems platzierbar und dabei besonders widerstandsfähig gegenüber Wind und/oder Festkörpern ausgeführt.

Weitere Einzelheiten der Erfindung sind der Beispielsbeschreibung und den Zeichnungen zu entnehmen. Die Zeichnungen zeigen
- Fig.1: eine an einem Schlepper angebaute Sämaschine mit mehreren Säaggregaten in perspektivischer Ansicht von hinten;
- Fig.2: ein Säaggregat mit einem erfindungsgemäßen Dosiersystem und einem Abdeckmittel in perspektivischer Ansicht von der Seite;
- Fig.3a: das Säaggregat aus Fig.2 in einer schematischen Perspektivansicht von unten in einem zumindest nahezu vollständig geschlossenen Zustand;
- Fig.3b: das Säaggregat aus Fig.3a mit zumindest teilweise geöffnetem Abdeckmittel;
- Fig.4: das Säaggregat aus Fig.2 mit einem zumindest nahezu vollständig geöffneten Abdeckmittel in perspektivischer Ansicht von hinten; und
- Fig.5: ein erfindungsgemäßes Abdeckmittel in einem demontierten Zustand.

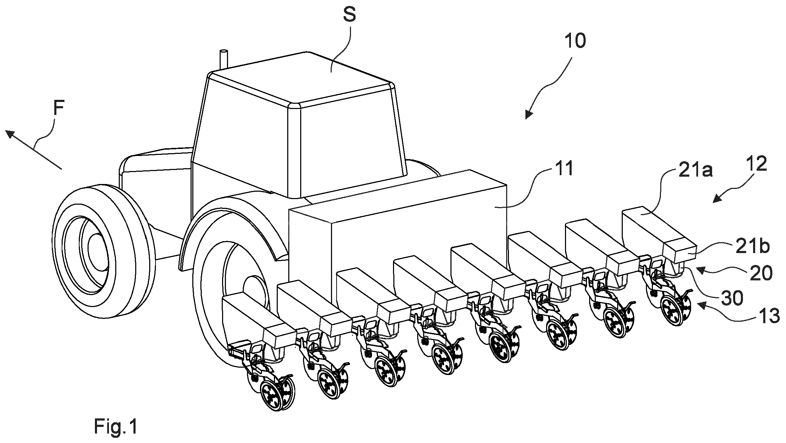

Ein als Sämaschine 10, insbesondere Einzelkornsämaschine, ausgebildetes und an einem Schlepper S angebautes landwirtschaftliches Arbeitsgerät zum Ausbringen von körnigem Material ist in abgesenkter Arbeitsstellung in der Fig.1 gezeigt. Alternativ zur gezeigten Ausführungsform kann das landwirtschaftliche Arbeitsgerät beispielsweise auch als eine gezogene Sämaschine 10 ausgebildet sein.

Die Sämaschine 10 umfasst hierbei einen zentralen Bevorratungsspeicher 11 in dem das auszubringende körnige Material, insbesondere Saatgut und/oder Dünger, bevorratet ist. Das körnige Material ist dabei über ein in den Figuren nicht gezeigtes, insbesondere pneumatisches, Fördersystem mehreren entlang an einem Rahmen der Sämaschine 10, insbesondere quer zu einer Fahrtrichtung F, angeordneten Säaggregaten 12 zubringbar. Die Säaggregate 12 sind hierbei dazu eingerichtet, das körnige Material entlang einer den jeweiligen Säaggregaten 12 zugeordneten Reihe und/oder Furche auf der landwirtschaftlichen Nutzfläche abzulegen.

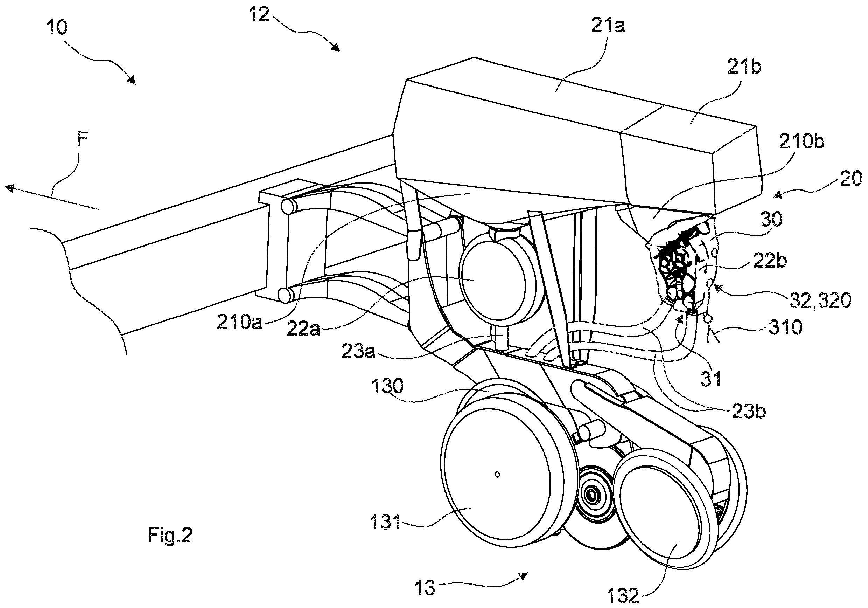

Ein einzelnes Säaggregat 12 ist in vergrößerter Ansicht in der Fig.2 gezeigt. Das Säaggregat 12 umfasst ein Dosiersystem 20, welches dazu eingerichtet ist, das körnige Material in bedarfsgerechten Mengen an eine ebenfalls am Säaggregat 12 angeordnete Saatgutablageeinrichtung 13 auszugeben und/oder zu übergeben. Die Saatgutablageeinrichtung 13 umfasst zur Einbettung des körnigen Materials als Scheibenschare ausgebildete Furchenöffnungselemente 130, Tiefenführungselemente 131 und/oder Vorrichtungen 132 zum Schließen der in der landwirtschaftlichen Nutzfläche ausgebildeten Furche.

Des Weiteren umfasst das Dosiersystem 20 zumindest einen ersten und zweiten Vorratsbehälter 21a, 21b zum Bevorraten des körnigen Materials. Bei dem gezeigten Ausführungsbeispiel ist in dem ersten Vorratsbehälter 21a ein als Saatgut ausgeführtes erstes körniges Material bevorratet, während in dem zweiten Vorratsbehälter 21b ein als Mikrogranulat, insbesondere Dünger, ausgeführtes zweites körniges Material bevorratet ist. Die beiden Vorratsbehälter 21a, 21b sind dabei während eines Befüllvorgangs automatisiert durch das Fördersystem und alternativ oder zusätzlich manuell durch einen Bediener über einen in den Figuren nicht gezeigten Deckel der jeweiligen Vorratsbehälter 21a, 21b befüllbar. Das Dosiersystem 20 umfasst außerdem den jeweiligen Vorratsbehältern 21a, 21b nachgeordnete, insbesondere als Kornvereinzelungsvorrichtung ausgebildete, Dosiervorrichtungen 22a, 22b. Die Dosiervorrichtungen 22a, 22b sind hierbei an einem, insbesondere zumindest teilweise als Auslaufbereich 210a, 210b ausgebildeten, unteren Bereich der Vorratsbehälter 21a, 21b angeordnet, über die das jeweilige körnige Material den Dosiervorrichtungen 22a, 22b zuführbar ist. Die Dosiervorrichtungen 22a, 22b sind dabei dazu eingerichtet, das zugeführte körnige Material in bedarfsgerechten Mengen und Abständen, insbesondere in Form von zumindest teilweise vereinzelten Körnern, auszugeben und/oder über zugeordnete Ausbringleitungen 23a, 23b an die Saatgutablageeinrichtung 13 zu übergeben.

Die Ausbringleitungen 23a, 23b sind dabei an den jeweiligen Ausbringbereichen der Dosiervorrichtungen 22a, 22b angeordnet.

Die in diesem Ausführungsbeispiel gezeigten Dosiervorrichtungen 22a, 22b können je nach Anwendungsfall in an sich bekannter Weise als mechanische und/oder pneumatische, insbesondere mit Druck beaufschlagbare, Überdurckvereinzelungen mit jeweils einer innerhalb eines Gehäuses der Dosiervorrichtungen 22a, 22b rotatorisch antreibbaren und perforierten, in den Figuren jedoch nicht gezeigten, Vereinzelungsscheibe ausgebildet sein. Alternativ dazu können die Dosiervorrichtungen 22a, 22b auch nach Art einer Unterdruckvereinzelung und/oder anstelle der Vereinzelungsscheibe mit einer, insbesondere zylinderförmigen, Vereinzelungstrommel ausgebildet sein.

In der Fig.2 ist darüber hinaus ein der, insbesondere zweiten, Dosiervorrichtung 22b zugeordnetes Abdeckmittel 30 in einem geschlossenen Zustand zu sehen. Das Abdeckmittel 30 ist dabei form- und/oder kraftschlüssig, insbesondere nach Art einer Klemmverbindung, am Vorratsbehälter 21b und/oder der Dosiervorrichtung 22b angeordnet. Des Weiteren ist das Abdeckmittel 30 hierbei zumindest teilweise aus flexiblem Material, insbesondere nach Art von Gewebe- und/oder Textilmaterial, ausgebildet. Die, insbesondere zweite, Dosiervorrichtung 22b ist durch das Abdeckmittel 30 zumindest nahezu vollständig abgedeckt und somit vor äußeren Einwirkungen bzw. Elnflüssen, wie beispielsweise Verschmutzungen oder erhöhter Feuchtigkeit bzw. Wasser, geschützt. Alternativ hierzu kann das Abdeckmittel 30 auch aus flexiblen und/oder weichen Kunststoffmaterialien oder zusätzlich aus festen, insbesondere kunststoff- oder metallischen, Materialien ausgebildet sein. Das Abdeckmittel 30 ist ferner, insbesondere in seinen Abmessungen und seiner Form, zumindest abschnittsweise korrespondierend zur Dosiervorrichtung 22b ausgeführt.

Für eine besonders einfache Montage und gute Umhüllung der Dosiervorrichtung 22b ist das Abdeckmittel 30 mantelförmig und einteilig ausgebildet, wobei alternativ auch eine mehrteilige, insbesondere zweiteilige, und/oder eine sackförmige Ausführung des Abdeckmittels 30 denkbar ist.

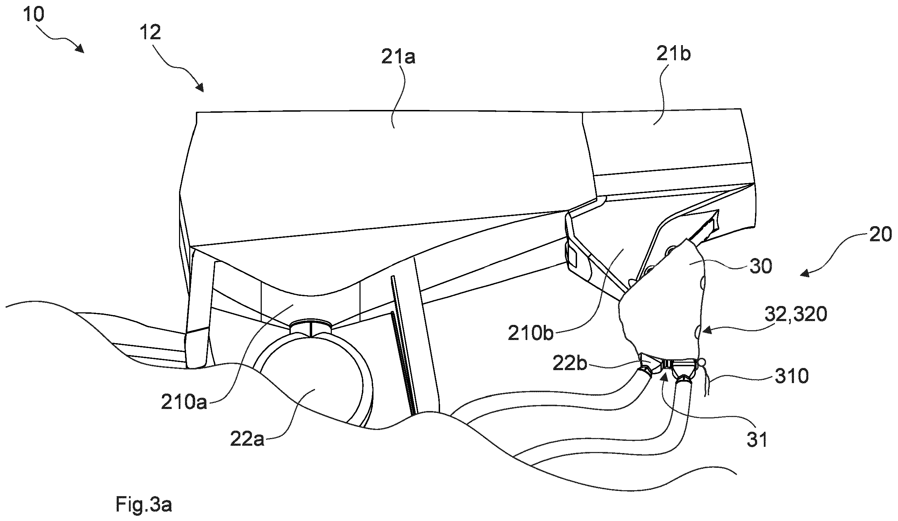

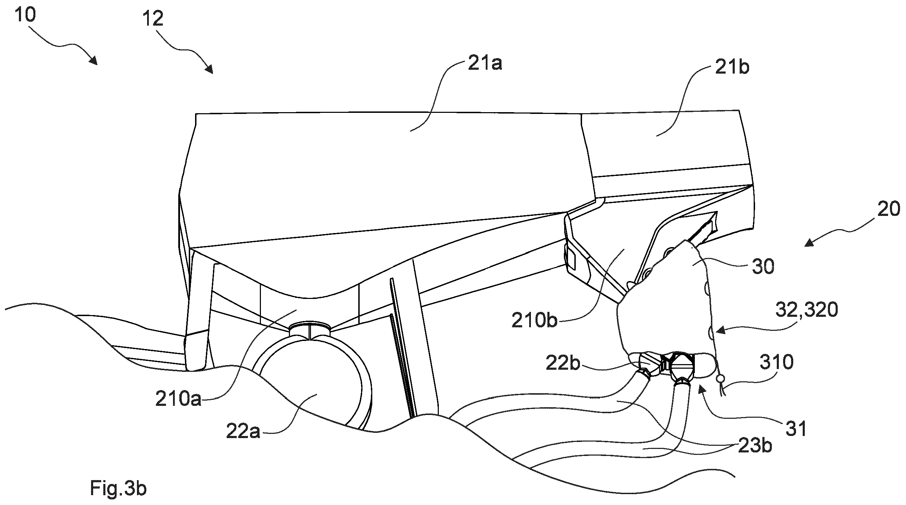

Des Weiteren ist auf einer den Ausbringleitungen 23b zugewandten Seite zumindest eine erste Öffnung 31 am Abdeckmittel 30 ausgebildet, wobei die Ausbringleitungen 23b, insbesondere der Ausgabebereich der zweiten Dosiervorrichtung 22b, durch die zumindest eine erste Öffnung 31 des Abdeckmittels 30 durchgeführt sind. Die zumindest eine erste Öffnung 31 weist einen anpassbaren Öffnungsquerschnitt auf, wie dies in der Fig.3a und Fig.3b zu sehen ist. Das Abdeckmittel 30 umfasst dabei zumindest ein der ersten Öffnung 31 zugeordnetes Seil- und/oder Schnurrelement 310. Durch ein Festziehen bzw. Zusammenraffen des Seil- und/oder Schnurrelements 310 kann die erste Öffnung 31, insbesondere der Öffnungsquerschnitt, verkleinert und somit das Abdeckmittel 30 geschlossen werden, wie in der Fig.3a gezeigt. Das Abdeckmittel 30 liegt dabei direkt an der Dosiervorrichtung 22b, insbesondere am Ausgabebereich und/oder an den Ausbringleitungen 23b, an. Des Weiteren kann die erste Öffnung 31, insbesondere der Öffnungsquerschnitt, auch durch ein Lösen bzw. Auseinanderziehen des Seil- und/oder Schnurrelements 310 vergrößert und somit das Abdeckmittel 30 geöffnet werden, wie dies in der Fig.3b gezeigt ist.

Alternativ oder zusätzlich zum Seil- und/oder Schnurrelements 310 kann der ersten Öffnung 31 auch ein Klett-, Reiß- und/oder Knopfverschluss zum Verändern des Öffnungsquerschnitts zugeordnet sein.

Das Abdeckmittel 30 ist darüber hinaus festkörper- und/oder flüssigkeitsabweisend ausgebildet und somit dazu eingerichtet, Verschmutzungen, insbesondere Staub und/oder Ackerboden, und/oder Flüssigkeiten, insbesondere Wasser, zumindest teilweise von der Dosiervorrichtung 22b zurückzuhalten. Diese Eigenschaft des Abdeckmittels 30 ist durch eine besonders dichte Ausführung der Gewebestruktur des flexiblen Materials erreicht. Neben dem Schutz gegen verhältnismäßig grobe Verschmutzungen ist die Dosiervorrichtung somit auch gegen besonders feinen Staub oder Flüssigkeitströpfchen mikroskopischer Größe geschützt. Alternativ oder zusätzlich kann das Abdeckmittel 30 auch durch einen Bediener, beispielsweise durch Besprühen, imprägniert werden, um beispielsweise die flüssigkeitsabweisenden Eigenschaften des flexiblen Materials noch weiter zu verbessern.

Das Abdeckmittel 30 ist über das, insbesondere nach Art eines Gewebe- und/oder Textilmaterials ausgebildete, flexible Material zumindest teilweise atmungsaktiv, insbesondere semipermeabel, ausgebildet. Hierdurch werden auf der einen Seite Festkörper und/oder Flüssigkeiten in Form von Verschmutzungen oder Regen von außen durch das Abdeckmittel 30 abgewiesen, während Luftbewegungen und/oder Abwärme, insbesondere von innen nach außen, durch das Abdeckmittel 30 passieren können. Derartige Abwärme kann während des Ausbringvorgangs beispielsweise durch den Betrieb der Dosiervorrichtung 22b und/oder durch einen zugeordneten Antrieb 220 entstehen.

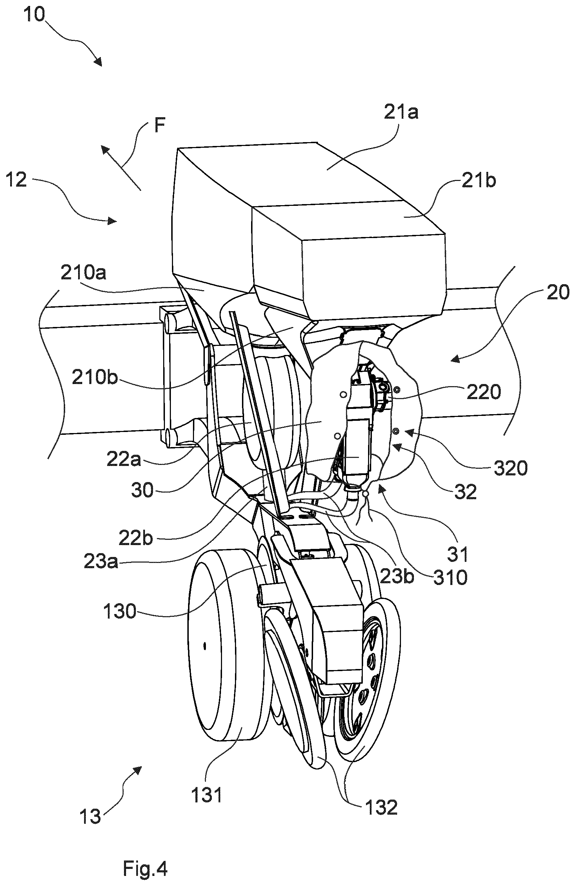

Am Abdeckmittel 30 ist des Weiteren, wie in der Fig.4 gezeigt, zumindest eine verschließbare zweite Öffnung 32 angeordnet. Zum zumindest teilweisen Verschließen oder Öffnen der zweiten Öffnung 32 und somit des Abdeckmittels 30 ist der zweiten Öffnung 32 zumindest ein nach Art eines Knopfverschlusses, insbesondere Druckknopfverschlusses, ausgebildetes Verschließelement 320 zugeordnet. Alternativ oder zusätzlich zur gezeigten Ausführungsform kann das Verschließelement 320 auch nach Art eines Reiß- und/oder Klettverschlusses oder anderen hierzu ähnlichen Verschlüssen ausgebildeten sein. Die zweite Öffnung ist dabei in Fahrtrichtung F auf einer hinteren Seite des Abdeckmittels 30 angeordnet, womit die mittels des Abdeckmittels 30 abgedeckte Dosiervorrichtung 22b für den Bediener, beispielsweise während einer Unterbrechung des Betriebs oder Ausbringvorgangs, besonders gut zugänglich ist.

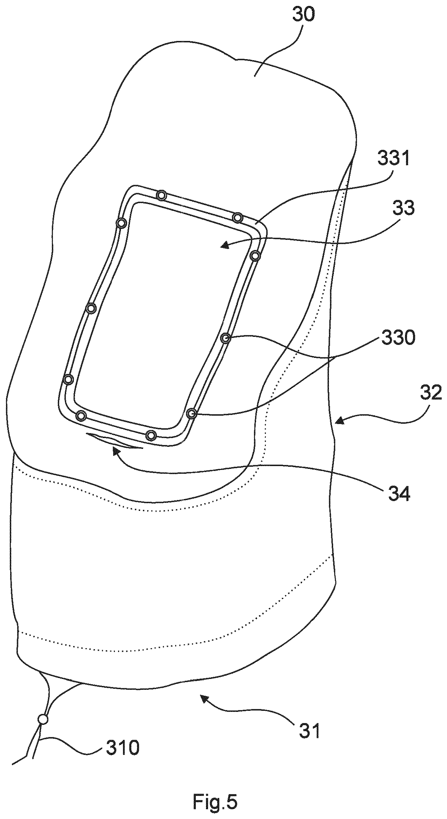

Die Fig.5 zeigt ein von dem Dosiersystem 20, insbesondere der Dosiervorrichtung 22b und/oder dem Vorratsbehälter 21b, demontiertes Abdeckmittel 30, welches nach Art einer vernähten Haube ausgeführt ist. Dem Abdeckmittel 30, insbesondere dem Ausschnitt 33, ist dabei zumindest ein Dichtungselement 331 zugeordnet, das zumindest teilweise am Abdeckmittel 30 angeordnet ist. Das Dichtungselement 331 ist hierbei als Elastomer, insbesondere nach Art einer Gummidichtung, ausgeführt und zumindest teilweise korrespondierend zum Ausschnitt 33 ausgebildet. In einem gemäß den Fig. 1 bis 4 montierten Zustand des Abdeckmittels 30 ist das Dichtungselement 331 somit, insbesondere wasser- und/oder staubdicht, zwischen dem Abdeckmittel 30 und dem Vorratsbehälter 21b oder der Dosiervorrichtung 22b angeordnet. Ferner sind am Abdeckmittel 30, insbesondere entlang des Umfangs des Ausschnitts 33, Durchgangslöcher 330 zum Durchführen von Schraubverbindungen ausgebildet. Die Durchgangslöcher 330 sind hierbei jeweils vom Dichtungselement 331 umschlossen.

Weiterhin ist in der Fig.5 zumindest eine an dem Abdeckmittel 30 ausgebildete Zusatzöffnung 34 zu sehen durch die in den Figuren nicht gezeigte elektrische Leitungen, insbesondere Kabellagen, der Dosiervorrichtung 22b und/oder des Antriebs 220 durchführbar sind. Alternativ oder zusätzlich sind auch der Zusatzöffnung 34 zugeordnete Dichtungselemente denkbar.

Alternativ oder zusätzlich zur gezeigten Ausführungsform ist auch ein weiteres der Zusatzöffnung 34 zugeordnetes Dichtungselement, beispielsweise zum Durchführen von Schlauch- und/oder Kabelleitungen, am Abdeckmittel 30 denkbar.

Darüber hinaus ist außerdem eine in den Figuren nicht gezeigte Ausführungsform denkbar, bei der dem Abdeckmittel 30 zumindest ein Strukturelement zugeordnet ist, welches dazu eingerichtet ist, das Abdeckmittel 30 zumindest teilweise zu spannen und/oder zu halten. Das Strukturelement kann dabei beispielsweise als Rohrkonstruktion ausgebildet sein, an dem das Abdeckmittel 30, beispielsweise mittels Ösen oder hierzu ähnlichen Befestigungsmitteln, anbringbar sein. Alterativ ist auch denkbar, dass Abdeckmittel 30 auf dem Strukturelement aufziehbar ist.

Es versteht sich, dass in den zuvor beschriebenen Ausführungsbeispielen genannte Merkmale nicht auf diese speziellen Kombinationen beschränkt und auch in beliebigen anderen Kombinationen möglich sind, wobei der Schutzbereich durch die angehängten Patentansprüche definiert wird.

Weiterhin versteht es sich, dass in den Figuren gezeigte Geometrien nur beispielhaft sind und auch in beliebigen anderen Ausgestaltungen möglich sind. Ferner ist zu den gezeigten Ausführungsbeispielen denkbar, dass beide Dosiervorrichtungen 21a, 21b einzeln mittels jeweils einem oder gemeinsam durch ein Abdeckmittel 30 abdeckbar sind. Darüber hinaus ist auch denkbar, dass das jeweilige Dosiersystem 20 eines Säaggregats 12 nur eine Dosiervorrichtung 21a, 21b umfasst, wobei die ein Dosiervorrichtung 21a, 21b mittels des Abdeckmittels 30 abdeckbar ist.

### Bezugszeichenliste

- 10: Sämaschine
- 11: Bevorratungsspeicher
- 12: Säaggregat
- 13: Saatgutablageeinrichtung
- 130: Furchenöffnungselemente
- 131: Tiefenführungselemente
- 132: Vorrichtungen zum Schließen von Furchen
- 20: Dosiersystem
- 21a, 21b: Vorratsbehälter
- 210a, 210b: Auslaufbereich
- 22a, 22b: Dosiervorrichtung
- 220: Antrieb
- 23a, 23b: Ausbringleitung
- 30: Abdeckmittel
- 31: erste Öffnung
- 310: Seil- und/oder Schnurrelement
- 32: zweite Öffnung
- 320: Verschließelement
- 33: Ausschnitt
- 330: Durchgangslöcher
- 331: Dichtungselement
- 34: Zusatzöffnung
- F: Fahrtrichtung
- S: Schlepper

## Patentansprüche

1. Dosiersystem (20) für eine landwirtschaftliche Sämaschine (10), insbesondere Einzelkornsämaschine, umfassend,
- zumindest eine, vorzugsweise nach Art einer Kornvereinzelungsvorrichtung ausgebildete, Dosiervorrichtung (22a, 22b) zum Dosieren von zubringbarem körnigem Material, wobei die Dosiervorrichtung (22a, 22b) dazu eingerichtet ist, das körnige Material in bedarfsgerechten Mengen und, vorzugsweise in Form von zumindest teilweise vereinzelten Körnern, in Richtung einer landwirtschaftliche Nutzfläche auszugeben, und
- zumindest ein der Dosiervorrichtung (22a, 22b) zugeordnetes Abdeckmittel (30),
wobei das Abdeckmittel (30) zumindest teilweise aus flexiblem Material, insbesondere nach Art von Gewebe- und/oder Textilmaterial, ausgebildet ist, und dass die Dosiervorrichtung (22a, 22b), vorzugsweise zumindest nahezu vollständig, mittels des zumindest einen Abdeckmittels (30) abdeckbar ist, **dadurch gekennzeichnet, dass** das Abdeckmittel (30) zumindest eine erste Öffnung (31) mit anpassbarem Öffnungsquerschnitt aufweist, welcher von einem vollständig geöffneten, insbesondere großen, Öffnungsquerschnitt bis zu einem zumindest nahezu vollständig geschlossenen, insbesondere kleinen, Öffnungsquerschnitt anpassbar ist.

2. Dosiersystem (20) nach Anspruch 1, **dadurch gekennzeichnet, dass** das Abdeckmittel (30) zumindest teilweise sack- oder mantelförmig ausgebildet ist.

3. Dosiersystem (20) nach zumindest einem der vorgenannten Ansprüche 1 und 2, **dadurch gekennzeichnet, dass** das Abdeckmittel (30) mehrteilig, vorzugsweise zweiteilig, ausgebildet ist.

4. Dosiersystem (20) nach zumindest einem der vorgenannten Ansprüche 1 bis 3, **dadurch gekennzeichnet, dass** das Abdeckmittel (30) zumindest teilweise festkörper- und/oder flüssigkeitsabweisend ausgebildet ist und vorzugsweise dazu eingerichtet ist, Verschmutzungen, insbesondere Staub und/oder Ackerboden, und/oder Flüssigkeiten, insbesondere Wasser, zumindest teilweise von der Dosiervorrichtung (22a, 22b) zurückzuhalten.

5. Dosiersystem (20) nach zumindest einem der vorgenannten Ansprüche 1 bis 4, umfassend, zumindest ein der Dosiervorrichtung (22a, 22b) vorgeordneter Vorratsbehälter (21a, 21b) zum Bevorraten des körnigen Materials, **dadurch gekennzeichnet, dass** das Abdeckmittel (30) form- und/oder kraftschlüssig, vorzugsweise nach Art einer Klemmverbindung, am Vorratsbehälter (21a, 21b) und/oder der Dosiervorrichtung (22a, 22b), insbesondere zwischen dem Vorratsbehälter (21a, 21b) und der Dosiervorrichtung (22a, 22b), angeordnet ist.

6. Dosiersystem (20) nach Anspruch 5, **dadurch gekennzeichnet, dass** dem Abdeckmittel (30) zumindest ein Dichtungselement (331) zugeordnet ist, wobei das Dichtungselement (331), vorzugsweise wasser- und/oder staubdicht, zwischen dem Abdeckmittel (30) und dem Vorratsbehälter (21a, 21b) oder der Dosiervorrichtung (22a, 22b) angeordnet ist.

7. Dosiersystem (20) nach zumindest einem der vorgenannten Ansprüche 1 bis 6, **dadurch gekennzeichnet, dass** zumindest eine an dem Abdeckmittel (30) angeordnete zweite Öffnung (32) zumindest teilweise mittels wenigstens eines, vorzugsweise nach Art eines Reiß-, Klett- und/oder Knopfverschlusses ausgebildeten, Verschließelementes (320) verschließbar ist.

8. Dosiersystem (20) nach zumindest einem der vorgenannten Ansprüche 1 bis 7, **dadurch gekennzeichnet, dass** dem Abdeckmittel (30) zumindest ein Strukturelement zugeordnet ist, das dazu eingerichtet ist, das Abdeckmittel (30) zumindest teilweise zu spannen und/oder zu halten.

## Claims

1. Metering system (20) for an agricultural sowing machine (10), in particular a precision seed drill, comprising:
- at least one metering device (22a, 22b), preferably designed in the manner of a seed singulation device, for metering feedable granular material, the metering device (22a, 22b) being configured to dispense the granular material in quantities required, and preferably in the form of at least partially singulated seeds, in the direction of agricultural land, and
- at least one cover means (30) associated with the metering device (22a, 22b),
the cover means (30) being at least partially made of flexible material, in particular of the woven and/or textile material type, and it being possible for the metering device (22a, 22b) to be covered, preferably at least almost completely, by means of the at least one cover means (30), **characterized in that** the cover means (30) has at least one first opening (31) having an adjustable opening cross section which can be adjusted from a completely open, in particular large, opening cross section to an at least almost completely closed, in particular small, opening cross section.

2. Metering system (20) according to claim 1, **characterized in that** the cover means (30) is at least partially sack-shaped or jacket-like.

3. Metering system (20) according to at least one of the preceding claims 1 and 2, **characterized in that** the cover means (30) is in multiple parts, preferably two parts.

4. Metering system (20) according to at least one of the preceding claims 1 to 3, **characterized in that** the cover means (30) is at least partially solid-repellent and/or liquid-repellent and is preferably designed to keep contaminants, in particular dust and/or topsoil, and/or liquids, in particular water, at least partially, away from the metering device (22a, 22b).

5. Metering system (20) according to at least one of the preceding claims 1 to 4, comprising at least one storage container (21a, 21b), arranged upstream of the metering device (22a, 22b), for storing the granular material,
**characterized in that** the cover means (30) is arranged in a form-fitting and/or frictional manner, preferably in the manner of a clamping connection, on the storage container (21a, 21b) and/or the metering device (22a, 22b), in particular between the storage container (21a, 21b) and the metering device (22a, 22b).

6. Metering system (20) according to claim 5, **characterized in that** at least one sealing element (331) is associated with the cover means (30), the sealing element (331) being arranged, preferably in a water-tight and/or dust-tight manner, between the cover means (30) and the storage container (21a, 21b) or the metering device (22a, 22b).

7. Metering system (20) according to at least one of the preceding claims 1 to 6, **characterized in that** at least one second opening (32) arranged on the cover means (30) can be closed at least partially by means of at least one closing element (320), preferably designed in the manner of a zipper, hook and loop fastener and/or button closure.

8. Metering system (20) according to at least one of the preceding claims 1 to 7, **characterized in that** at least one structural element, which is designed to at least partially tension and/or hold the cover means (30), is associated with the cover means (30).

## Revendications

1. Système de dosage (20) pour un semoir agricole (10), en particulier un semoir monograine, comprenant,
- au moins un dispositif de dosage (22a, 22b), réalisé de préférence à la manière d'un dispositif de séparation de grains, pour le dosage de matériau granulaire pouvant être amené, dans lequel le dispositif de dosage (22a, 22b) est conçu pour distribuer le matériau granulaire en quantités adaptées aux besoins et, de préférence, sous forme de grains au moins partiellement séparés, en direction d'une surface agricole utile, et
- au moins un moyen de recouvrement (30) associé au dispositif de dosage (22a, 22b),
dans lequel le moyen de recouvrement (30) est réalisé au moins partiellement en un matériau flexible, en particulier à la manière d'un matériau tissé et/ou textile, et en ce que le dispositif de dosage (22a, 22b) peut être recouvert, de préférence au moins presque entièrement, au moyen de l'au moins un moyen de recouvrement (30), **caractérisé en ce que** le moyen de recouvrement (30) présente au moins une première ouverture (31) comportant une section transversale d'ouverture pouvant être adaptée qui peut être adaptée d'une section transversale d'ouverture entièrement ouverte, en particulier grande, à une section transversale d'ouverture au moins presque entièrement fermée, en particulier petite.

2. Système de dosage (20) selon la revendication 1, **caractérisé en ce que** le moyen de recouvrement (30) est réalisé au moins partiellement en forme de sac ou d'enveloppe.

3. Système de dosage (20) selon au moins l'une des revendications 1 et 2 précédentes, **caractérisé en ce que** le moyen de recouvrement (30) est réalisé en plusieurs parties, de préférence en deux parties.

4. Système de dosage (20) selon au moins l'une des revendications 1 à 3 précédentes, **caractérisé en ce que** le moyen de recouvrement (30) est réalisé de manière à repousser au moins partiellement les corps solides et/ou les liquides et est de préférence conçu pour retenir au moins partiellement les salissures, en particulier la poussière et/ou la terre arable, et/ou les liquides, en particulier l'eau, du dispositif de dosage (22a, 22b).

5. Système de dosage (20) selon au moins l'une des revendications 1 à 4 précédentes, comprenant au moins un réservoir de stockage (21a, 21b) disposé en amont du dispositif de dosage (22a, 22b) et permettant de stocker le matériau granulaire, **caractérisé en ce que** le moyen de recouvrement (30) est disposé par complémentarité de forme et/ou à force, de préférence à la manière d'une liaison par serrage, sur le réservoir de stockage (21a, 21b) et/ou le dispositif de dosage (22a, 22b), en particulier entre le réservoir de stockage (21a, 21b) et le dispositif de dosage (22a, 22b).

6. Système de dosage (20) selon la revendication 5, **caractérisé en ce qu'**au moins un élément d'étanchéité (331) est associé au moyen de recouvrement (30), dans lequel l'élément d'étanchéité (331) est disposé entre le moyen de recouvrement (30) et le réservoir de stockage (21a, 21b) ou le dispositif de dosage (22a, 22b), de préférence de manière à être étanche à l'eau et/ou à la poussière.

7. Système de dosage (20) selon au moins l'une des revendications 1 à 6 précédentes, **caractérisé en ce qu'**au moins une seconde ouverture (32) disposée sur le moyen de recouvrement (30) peut être fermée au moins partiellement au moyen d'au moins un élément de fermeture (320), de préférence réalisé à la manière d'une fermeture à glissière, d'une fermeture à velcro et/ou d'une fermeture à boutons.

8. Système de dosage (20) selon au moins l'une des revendications 1 à 7 précédentes, **caractérisé en ce qu'**au moins un élément structural est associé au moyen de recouvrement (30), lequel élément structural est conçu pour tendre et/ou maintenir au moins partiellement le moyen de recouvrement (30).
